Europäisches Patentamt

European Patent Office

Office européen des brevets

(11) Veröffentlichungsnummer: **0 357 928 A2**

## (12) EUROPÄISCHE PATENTANMELDUNG

(21) Anmeldenummer: **89113705.1**

(22) Anmeldetag: **25.07.89**

(51) Int. Cl.⁵: **B01D 46/00 , C04B 14/40**

(30) Priorität: **10.08.88 DE 3827157**

(43) Veröffentlichungstag der Anmeldung:
**14.03.90 Patentblatt 90/11**

(84) Benannte Vertragsstaaten:
**BE DE FR IT LU NL**

(71) Anmelder: **DUST UMWELTSCHUTZTECHNIK GMBH**
**Steinbachstrasse 7**
**D-8382 Arnstorf 1(DE)**

(72) Erfinder: **Niekerken, Uwe**
**Auf dem Brink 19**
**D-2056 Glinde(DE)**
Erfinder: **Vieth, Gerhard**
**Kirschgarten 14**
**D-2050 Hamburg 80(DE)**
Erfinder: **Feineis, Norbert, Dr.**
**Fritz-Ortner-Strasse 3**
**D-8711 Markt Einersheim(DE)**

(74) Vertreter: **Klingseisen, Franz, Dipl.-Ing.**
**Dr. F. Zumstein Dipl.-Ing. F. Klingseisen**
**Bräuhausstrasse 4**
**D-8000 München 2(DE)**

(54) **Verfahren zum Entsorgen von Asbeststaub.**

(57) Bei einem Verfahren zum Entsorgen von Asbeststaub, wobei der anfallende Asbeststaub abgesaugt und in einem Sammelbehälter gesammelt wird, wird der gesammelte Asbeststaub nach dosierter Zugabe von Wasser oder Zementmilch zu stückigem Gut wie Briketts verpreßt, um eine einfache Entsorgung zu erreichen und den Asbeststaub wie üblichen Hausmüll auf Deponien lagern zu können.

EP 0 357 928 A2

## Verfahren zum Entsorgen von Asbeststaub

Die Erfindung betrifft ein Verfahren zum Entsorgen von Asbeststaub nach dem Oberbegriff des Anspruchs 1.

Im Baubereich wurde vielfach Asbestmaterial eingesetzt, wobei auch Spritzasbest und andere schwach gebundene Asbestprodukte verarbeitet wurden, die Asbeststaub freisetzen können. Um bei der Sanierung von Gebäuden mit derartigen Asbestprodukten den Asbeststaubgehalt in der Raumluft auf ein Minimum zu reduzieren, ist es bekannt, an der Arbeitsstelle den anfallenden Asbeststaub über eine Rohrleitung abzusaugen und in einem Behälter beispielsweise auf einem Fahrzeug zu sammeln. Der so gesammelte Asbeststaub gehört zu den sogenannten nachweispflichtigen Abfällen, die unter besonderen Auflagen nur auf bestimmten Mülldeponien eingelagert werden können.

Der Erfindung liegt die Aufgabe zugrunde, ein Verfahren der eingangs angegebenen Art zu schaffen, mittels dem Asbeststaub einfach entsorgt und wie üblicher Hausmüll auf Deponien eingelagert werden kann.

Diese Aufgabe wird erfindungsgemäß dadurch gelöst, daß der gesammelte Asbeststaub zu einer kompakten Masse gebunden wird, worauf die gebundene Masse, die keinen Asbeststaub mehr freisetzen kann, als stückiges Gut, beispielsweise in Brikettform, auf einer Deponie wie üblicher Abfall endgelagert werden kann.

Vorteilhafte Ausgestaltungen der Erfindung sind in der nachfolgenden Beschreibung und in den weiteren Ansprüchen angegeben.

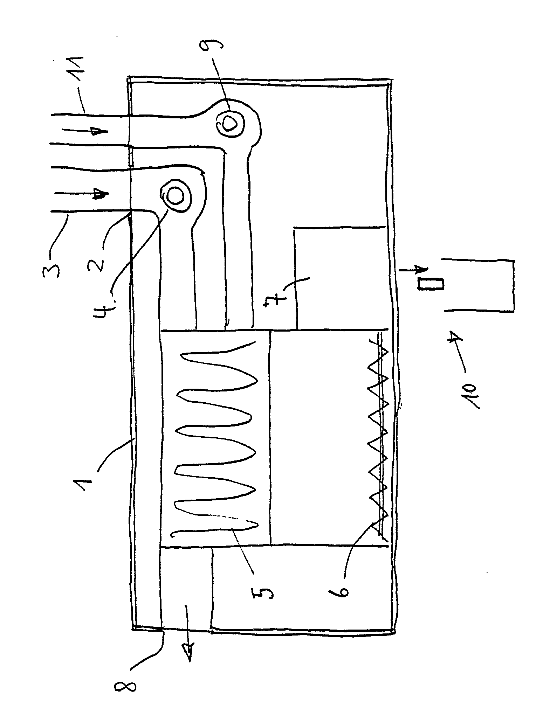

Die Erfindung wird beispielsweise anhand der Zeichnung näher erläutert, die schematisch eine Vorrichtung zum Entsorgen von Asbeststaub zeigt.

In einem Container oder Fahrzeugaufbau 1, der mit einem Anschluß 2 für eine zur Baustelle führenden Leitung 3 versehen ist, sind verschiedene Aggregate angeordnet. Die durch die Leitung 3 zugeführte, mit Asbeststaub beladene Luft wird durch ein Gebläse 4 in eine Filtereinrichtung 5 geleitet, in der der Asbeststaub abgeschieden und beispielsweise durch eine Förderschnecke 6 in eine Einrichtung 7 befördert wird, in der der Asbeststaub zu einer kompakten Masse gebunden wird. Die vom Asbeststaub gereinigte Luft tritt gegebenenfalls über Feinfilter bei 8 aus dem Aufbau 1 aus. Der Aufbau 1 ist so ausgebildet, daß darin ein Unterdruck aufrechterhalten werden kann. Hierfür ist zweckmäßigerweise ein weiterer Ventilator in dem Aufbau 1 vorgesehen, der bei 9 angedeutet ist. Ferner ist der Aufbau 1 zweckmäßigerweise derart stabil ausgebildet, daß die den Asbeststaub verarbeitenden Aggregate gegen eine mechanische Beschädigung beispielsweise bei einem Unfall des Fahrzeugs geschützt sind.

Die Einrichtung 7 zum Binden des Asbeststaubs kann in verschiedener Weise ausgebildet sein. So kann beispielsweise der anfallende Asbeststaub, der üblicherweise noch nicht abgebundenen Zement enthält, dosiert mit Wasser versetzt werden, worauf der angefeuchtete Asbeststaub verpreßt wird. Durch Abbinden des Zements ergeben sich formbeständige Briketts, die den Asbeststaub derart binden, daß diese Briketts wie beispielsweise Asbestzementplatten als unbedenklich eingestuft werden können.

Nach einer anderen Ausgestaltung kann dem gesammelten Asbeststaub dosiert Zementmilch zugegeben werden, worauf das so angefeuchtete Material verpreßt wird. Hierdurch erhält man in den fertigen Briketts einen höheren Zementanteil.

Die Zugabe von Wasser oder Zementmilch wird so dosiert, daß beim Verpressen des Materials im wesentlichen kein Wasser freigesetzt wird, weil dieses wiederum durch Asbeststaub kontaminiert wäre und gesondert entsorgt werden müßte. Es kann auch eine Rückführung von beim Verpressen anfallendem Wasser in die Dosiereinrichtung vorgesehen werden, so daß anfallendes kontaminiertes Wasser beim Verpressen zu Briketts wieder verarbeitet werden kann.

Die auf diese Weise hergestellten Briketts können, wie bei 10 schematische angedeutet, in einem außerhalb des Aufbaus 1 vorgesehenen Behälter gesammelt und auf einer Deponie wie Hausmüll endgelagert werden.

Der als Unterdruckkammer und Schutzbehälter ausgebildete Aufbau 1 kann auch als Zwischenlager für den zu stückigem Gut verpreßten Asbeststaub verwendet werden. Die Aufrechterhaltung eines Unterdrucks in dem Aufbau 1 ist insbesondere für Reparaturarbeiten an den den Asbeststaub verarbeitenden Aggregaten vorgesehen. Die dabei abgesaugte Luft wird durch die Filtereinrichtung geleitet. Als Antriebsaggregate für diese mobile Entsorgungseinrichtung werden zweckmäßigerweise Elektromotoren mit Rücksicht auf die Schallentwicklung vorgesehen, wobei ein Antriebsaggregat dazu dient, Asbest zu entsorgen, während das andere Antriebsaggregat zur Aufrechterhaltung eines Unterdrucks in den zu sanierenden Räumen eines Gebäudes verwendet werden kann wofür eine Leitung 11 vorgesehen wird.

Nach einer anderen Ausgestaltung kann der anfallende Asbeststaub unmittelbar oder nach dem Brikettieren mittels Druck durch hohe Temperatureinwirkung weiter verarbeitet werden. So kann beispielsweise das Asbestmaterial einem Schmelzvorgang unterzogen werden. Es ist auch möglich, durch Druck und Temperatur einen Sintervorgang durchzuführen. Auf diese Weise können durch den Schmelz- oder Sintervorgang auch Werkstücke wie Platten, Formsteine und dergleichen hergestellt werden, die als Baumaterial wiederverwendet werden können, ohne daß die Gefahr einer erneuten Freisetzung von Asbeststaub besteht.

Beim Verpressen des gesammelten Asbeststaubs kann anstelle von Wasser oder Zementmilch auch ein anderes Bindemittel zugegeben werden.

In den in und aus dem Aufbau 1 hinein- und herausführenden Leitungen sind gasdichte Schieberventile vorgesehen.

## Ansprüche

1. Verfahren zum Entsorgen von Asbeststaub, wobei der anfallenden Asbeststaub abgesaugt und in einem Sammelbehälter gesammelt wird,
**dadurch gekennzeichnet,**
daß der geammelte Asbeststaub nach dosierter Zugabe von Wasser oder Zementmilch zu stückigem Gut, wie beispielsweise Briketts, verpreßt wird.

2. Verfahren nach Anspruch 1,
dadurch gekennzeichnet,
daß das Sammeln und Verpressen des Asbeststaubs in einer Unterdruckkammer ausgeführt wird.

3. Verfahren zum Entsorgen von Asbeststaub, wobei der Asbeststaub abgesaugt und gesammelt wird,
dadurch gekennzeichnet,
daß der gesammelte Asbeststaub durch Temperatureinwirkung einem Schmelz- oder Sintervorgang unterworfen wird.

EP 0 357 928 A2